# EUROPÄISCHE PATENTSCHRIFT

(11) **EP 1 376 844 B1**
(45) Veröffentlichungstag und Bekanntmachung des Hinweises auf die Patenterteilung: **09.08.2006**
(21) Anmeldenummer: 03014161.8
(22) Anmeldetag: 24.06.2003
(51) Int. Cl.: H02M 7/217

(54) **Versorgungsschaltung, insbesondere für Entladungslampe**
Supply circuit, in particular for discharge lamp
Circuit d'alimentation, notamment pour lampe à décharge

(30) Priorität: 27.06.2002 DE 10228742
(43) Veröffentlichungstag der Anmeldung: 02.01.2004
(73) Patentinhaber: Patent-Treuhand-Gesellschaft für elektrische Glühlampen mbH, 81543 München (DE)
(72) Erfinder: Weirich, Michael, Dr., 82008 Unterhaching (DE)
(74) Vertreter: Raiser, Franz

(56) Entgegenhaltungen:
- EP-A- 0 230 930
- WO-A-01/26213
- WO-A-01/61832
- US-A- 5 498 995
- US-A- 5 757 627
- US-B1- 6 301 135
- PATENT ABSTRACTS OF JAPAN Bd. 013, Nr. 173 (E-748), 24. April 1989 (1989-04-24) & JP 01 004102 A (NEC CORP.), 9. Januar 1989 (1989-01-09)
- PATENT ABSTRACTS OF JAPAN Bd. 018, Nr. 124 (E-1517), 28. Februar 1994 (1994-02-28) & JP 05 315956 A (YOKOGAWA ELECTRIC), 26. November 1993 (1993-11-26)

## Beschreibung

### Technisches Gebiet

Die vorliegende Erfindung bezieht sich auf eine Versorgungsschaltung und auf ein elektronisches Vorschaltgerät für Lampen. Unter Versorgungsschaltung wird hier eine Schaltung verstanden, die eine elektrische Versorgungsleistung für einen Verbraucher zur Verfügung stellt. Dabei kann sie die elektrische Versorgungsleistung in einer auf den Verbraucher abgestimmten Weise aufbereiten, also beispielsweise aus einer Versorgungswechselspannung in eine Gleichspannung umwandeln oder umgekehrt, in der Frequenz verändern, in der Spannung transformieren usw.. Der Begriff der Versorgungsschaltung umfasst also insbesondere Versorgungsgleichrichterschaltungen, Versorgungsoszillatorschaltungen und Versorgungstransformatoren, also Wandler zu Versorgungszwecken im allgemeinen Sinn.

### Stand der Technik

Häufig treten bei solchen Versorgungsschaltungen für den Betrieb wesentliche Schalttransistoren auf, deren Steuereingang in geeigneter Weise angesteuert werden muss, um den funktionsgerechten Betrieb der Versorgungsschaltung zu gewährleisten. Die Erfindung bezieht sich dabei auf den Fall, dass der Steuereingang des Schalttransistors von einer Zwangssteuerschaltung angesteuert wird. Die Erfindung bezieht sich mit anderen Worten nicht auf Schaltungen, deren Dauerbetrieb auf einem Selbsterregungsmechanismus basiert.

In den Schriften US 6,301,135 (Mammano) und US 5,498,995 (Szepesi) sind Steuerschaltungen für Schaltnetzteile offenbart. In beiden Fällen geht es um Schaltnetzteile deren Ausgang vom Eingang galvanisch getrennt ist und ein Teil der Steuerschaltung dem Ausgang zugeordnet ist. Diesem Teil steht bei der Inbetriebnahme des Schaltnetzteils keine Versorgungsspannung zur Verfügung. Deshalb arbeitet die Regelung des Schaltnetzteils in diesem Anlaufzustand noch nicht. Schaltnetzteile nach dem benannten Stand der Technik verfügen daher über eine Oszillatorschaltung die dem Eingang zugeordnet ist und über eine Treiberschaltung einen Schalttransistor ansteuert.

### Darstellung der Erfindung

Der Erfindung liegt das technische Problem zugrunde, eine verbesserte Versorgungsschaltung mit einem Schalttransistor und einer Zwangssteuerschaltung anzugeben.

Hierzu sieht die Erfindung eine mit dem Steuereingang des Schalttransistors verbundene Oszillatorschaltung vor, die dazu ausgelegt ist, bei einem Betriebsbeginn der Versorgungsschaltung zunächst eine von der Zwangssteuerschaltung unabhängige Oszillation auszuführen und dabei den Steuereingang des Schalttransistors anzusteuern, wobei die Versorgungsschaltung dazu ausgelegt ist, dass die Zwangssteuerschaltung infolge der Ansteuerung des Steuereingangs durch die Oszillatorschaltung durch eine von der Versorgungsschaltung aufgebaute Versorgungsleistung versorgt wird und daraufhin die Ansteuerung des Steuereingangs des Schalttransistors übernimmt.

Erfindungsgemäß ist die Oszillatorschaltung gleichzeitig eine Verstärkerschaltung ist, die infolge einer Rückkopplung als Oszillator fungieren kann. Diese Verstärkerschaltung ist dann zwischen die Zwangssteuerschaltung und den Steuereingang des Schalttransistors geschaltet und dient bei der Übernahme der Ansteuerung des Schalttransistors durch die Zwangssteuerung als Verstärker für deren Steuersignale.

Ferner bezieht sich die Erfindung auch auf ein elektronisches Vorschaltgerät für eine Lampe, in dem eine solche Versorgungsschaltung eingesetzt ist.

Bevorzugte Ausführungsformen der Erfindung sind in den abhängigen Ansprüchen angegeben.

Die Erfindung beruht auf der Erkenntnis, dass die Leistungsversorgung der Zwangssteuerschaltung bei den beschriebenen Versorgungsschaltungen ein besonderes Problem darstellt. Einerseits ist die Zwangssteuerschaltung für die Funktion der auf dem Schaltbetrieb des Schalttransistors beruhenden Versorgungsschaltung notwendig. Daher kann die Zwangssteuerschaltung selbst nicht ohne weiteres mit einer von der Versorgungsschaltung selbst zur Verfügung gestellten Versorgungsleistung betrieben werden. Vielmehr werden konventionellerweise von der Eingangsleistung der Versorgungsschaltung über Spannungsteilerschaltungen Versorgungsleistungen für die Zwangssteuerschaltung abgezweigt. Zum einen hat das den Nachteil, dass die entsprechenden Widerstände zu einem zusätzlichen Leistungsverbrauch führen. Zum zweiten kann die Versorgungsschaltung u.U. für die Versorgung der Zwangssteuerschaltung besser geeignete Versorgungsleistungen erzeugen, die jedoch beim Betriebsbeginn der Versorgungsschaltung nicht zur Verfügung stehen, weil die Zwangssteuerschaltung dabei mangels Ansteuerung des Schalttransistors noch nicht arbeitet.

Es wäre nun denkbar, für den Betriebsbeginn eine Versorgung der Zwangssteuerschaltung durch eine Spannungsteilerschaltung vorzusehen und nach Funktionsaufnahme der Versorgungsschaltung dann auf eine Versorgung der Zwangssteuerschaltung aus der Versorgungsschaltung selbst umzuschalten. Dabei wären allerdings die Widerstände der Spannungsteilerschaltung mit einem dauerhaften und während des Dauerbetriebs nicht notwendigen Leistungsverbrauch verbunden. Wenn man dies durch eine Schaltbarkeit der Spannungsteilerschaltung lösen wollte, so wäre ein entsprechend hochspannungsfester Schalter notwendig, was den technischen Aufwand deutlich erhöht.

Die Erfindung geht nun davon aus, dass für den Betriebsbeginn der Versorgungsschaltung eine Ansteuerung des Steuereingangs des Schalttransistors durch eine Oszillatorschaltung vorgesehen ist. Dabei kann es sich um eine ganz einfache Schaltung mit einem vergleichsweise geringen Leistungsverbrauch handeln, beispielsweise um einen einfachen selbst erregten Analogoszillator. Jedenfalls kann diese Oszillatorschaltung mit einer vergleichsweise geringen Leistung betrieben werden, die beispielsweise durch einen Widerstand oder eine Spannungsteilerschaltung an dem Versorgungseingang der Versorgungsschaltung abgegriffen werden kann. Demgegenüber kann die Zwangssteuerschaltung wegen der Anforderungen der Versorgungsschaltung an die Ansteuerung des Schalttransistors im Dauerbetrieb einen komplexeren Aufbau und damit einen größeren Leistungsbedarf haben.

Wenn die Funktion der Versorgungsschaltung durch die Ansteuerung des Schalttransistors durch die Oszillatorschaltung gewissermaßen als Notbetrieb in Gang gesetzt worden ist, kann die Versorgungsschaltung die Versorgung der Zwangssteuerschaltung übernehmen, woraufhin diese in der für Dauerbetrieb ausgelegten und entsprechend optimierten Weise die Ansteuerung übernimmt. Die Erfindung unterscheidet also zwischen einer Ansteuerung des Schalttransistors bei Betriebsbeginn durch eine Oszillatorschaltung mit möglichst reduziertem Leistungsverbrauch einerseits und einer dauerhaften Ansteuerung des Schalttransistors nach Funktionsbeginn der Versorgungsschaltung durch eine eigens hierfür vorgesehene Zwangssteuerschaltung andererseits.

Die Erfindung ist so ausgestaltet, dass die Oszillatorschaltung gleichzeitig eine Verstärkerschaltung ist, die infolge einer Rückkopplung als Oszillator fungieren kann. Diese Verstärkerschaltung ist dann zwischen die Zwangssteuerschaltung und den Steuereingang des Schalttransistors geschaltet und dient bei der Übernahme der Ansteuerung des Schalttransistors durch die Zwangssteuerung als Verstärker für deren Steuersignale. Hierbei ist zu berücksichtigen, dass wenn es sich bei der Zwangssteuerschaltung beispielsweise um eine Digitalschaltung handelt, im Regelfall eine Verstärkerschaltung zur Ansteuerung des Schalttransistors notwendig ist. Eine solche Verstärkerschaltung wird bei Digitalschaltungen häufig auch als Treiberschaltung bezeichnet, wobei im folgenden zwischen Verstärkern und Treibern nicht eigens unterschieden werden soll. Die Verstärkerschaltung enthält Verstärkertransistoren, so dass durch Einfügung einer Rückkopplung mit geringem Aufwand eine erfindungsgemäße Oszillatorschaltung realisiert werden kann. Es muss dann eine geeignete Möglichkeit gefunden werden, zwischen den beiden Betriebszuständen als Oszillatorschaltung und als Verstärkerschaltung umzuschalten. Darauf wird im folgenden noch näher eingegangen.

Die erfindungsgemäße Versorgungsschaltung ist oder enthält vorzugsweise eine sog. Leistungsfaktorkorrekturschaltung (oder PFC-Schaltung für Power Factor Correction). Solche Schaltungen werden insbesondere bei der Herstellung einer Gleichspannungsversorgungsleistung aus einer Wechselspannung verwendet, um den Oberwellenanteil der der Wechselspannungsleistungsversorgung entnommenen Ströme zu reduzieren. Beispielsweise kann es sich dabei um einen sog. Hochsetzsteller oder einen SEPIC-Wandler handeln. Der SEPIC-Wandler ist besonders bevorzugt. Leistungsfaktorkorrekturschaltungen dienen dazu, eine möglichst sinusförmige Stromaufnahme beispielsweise aus einem Wechselspannungsnetz zu gewährleisten und dabei einen Speicherkondensator auf eine möglichst konstante Gleichspannung als Versorgungsspannung für nachfolgende Schaltungsteile aufzuladen. Dabei wirken Lade- und Entladevorgänge von Spulen und Kondensatoren zusammen, wobei der Schaltbetrieb des bereits mehrfach erwähnten Schalttransistors von wesentlicher Bedeutung ist. Die Funktionsweise dieser Leistungsfaktorkorrekturschaltungen sind dem Fachmann bekannt und müssen hier nicht näher dargestellt werden. Die Funktionsweise des SEPIC-Wandlers ist bei der Beschreibung des Ausführungsbeispiels allerdings kurz zusammengefasst.

Die Zwangssteuerschaltung ist vorzugsweise eine Digitalschaltung und besonders bevorzugterweise eine programmierbare digitale Steuerschaltung bzw. ein sog. Mikrocontroller. Die digitale Steuerschaltung bzw. der Mikrocontroller kann darüber hinaus auch für die Ansteuerung weiterer Schaltungsteile verwendet werden, insbesondere auch für die Ansteuerung einer von der Leistungsfaktorkorrekturschaltung mit Gleichspannung versorgten Schaltung zuständig sein.

Zwischen den beiden Betriebszuständen als Oszillatorschaltung und als Verstärkerschaltung wird vorzugsweise abhängig von dem elektrischen Zustand des Eingangs der Oszillatorschaltung umgeschaltet bzw. unterschieden. Dadurch kann erreicht werden, dass allein durch den Betriebszustand der Zwangssteuerschaltung bereits der richtige Betriebszustand der Oszillatorschaltung vorgegeben wird. Im Falle eines Digitaleingangs der Oszillatorschaltung kann beispielsweise bei einem definierten logischen Eingangspegel die Verstärker- bzw. Treiberfunktion gegeben sein und bei einem unbestimmten Zwischenzustand (bei einem sog. Tri-State-Ausgang der Zwangssteuerschaltung) der Betriebszustand als Oszillatorschaltung vorgegeben sein. Auch bei Analogschaltungen kann die Höhe der Impedanz des Eingangs gegen ein Bezugspotential, etwa Masse oder ein Versorgungspotential, ausschlaggebend sein.

Die Erfindung ist jedoch auf diese Lösungen nicht eingeschränkt. Es können beispielsweise auch zeitliche Kriterien für die Unterscheidung der beiden Betriebszustände in Frage kommen, die durch eine RC-Konstante oder anderweitig realisiert sein können. Neben einer Zeitdefinition kommen auch ein Eingriff in die erwähnte Rückkopplung, beispielsweise das Öffnen eines Schalttransistors, oder eine digitale Lösung, etwa eine Invertierung eines Phasenversatzes oder dergleichen, in Frage.

Bevorzugt ist jedoch die Unterscheidung durch den elektrischen Zustand des Oszillatorschaltungseingangs. Wenn es sich bei der Oszillatorschaltung um einen analogen selbstschwingenden Oszillator mit der Möglichkeit der Zwangssteuerung durch den Eingang handelt, ergibt sich die Unterscheidung durch die Impedanz des Einganges in besonders einfacher Weise.

Die Erfindung richtet sich ferner auf ein elektronisches Vorschaltgerät für eine Lampe, in der die erfindungsgemäße Versorgungsschaltung inbegriffen ist. Bei der Lampe kann es sich beispielsweise um eine Halogenglühlampe handeln. Bei Halogenglühlampen werden zur Erzeugung der gewünschten Betriebsspannung häufig elektronische Transformatoren eingesetzt, die Versorgungsschaltungen im Sinn der Erfindung sind und als fremdgesteuerter Generator mit einem Schalttransistor beschrieben werden können. Hier ist in der Regel keine Leistungsfaktorkorrekturschaltung vorgesehen. Dennoch kann die Erfindung von Vorteil sein.

Bevorzugt ist jedoch die Anwendung bei einem elektronischen Vorschaltgerät für eine Entladungslampe, insbesondere eine Niederdruckentladungslampe. Hier werden Hochfrequenzoszillatoren eingesetzt, die von einer Gleichspannungsversorgung versorgt sind. Diese Gleichspannungsversorgung enthält neben einem Brückengleichrichter eine Leistungsfaktorkorrekturschaltung mit dem für die Erfindung wesentlichen Schalttransistor. Sollte es sich um ein elektronisches Vorschaltgerät für eine Entladungslampe handeln, bei dem keine Leistungsfaktorkorrekturschaltung vorgesehen ist, so kann die Erfindung auch im Hinblick auf die Schalttransistoren des Hochfrequenzoszillators, beispielsweise eines Halbbrückenoszillators, eingesetzt werden.

Im übrigen ist die erwähnte digitale Zwangssteuerschaltung bzw. der Mikrocontroller vorzugsweise auch für die Ansteuerung der Schalttransistoren eines solchen Hochfrequenzoszillators zuständig. Gerade bei Mikrocontrollern, die auch für die Zwangssteuerung eines Halbbrückenoszillators einschließlich entsprechender Programme für bestimmte Lampenbetriebszustände oder Fehlererkennungsfunktionen ausgelegt sind, ist eine nicht unerhebliche Leistungsversorgung notwendig. Hierbei kann die erfindungsgemäße Oszillatorschaltung eine wesentliche Reduzierung der Stromentnahme durch die erwähnte Spannungsteilerschaltung oder eine andere Versorgung mit sich bringen, so dass ein übergroßer Energieverbrauch während des Dauerbetriebs vermieden werden kann.

### Beschreibung der Zeichnungen

Im folgenden werden die einzelnen Aspekte der Erfindung anhand eines Ausführungsbeispiels näher erläutert. Dabei offenbarte Einzelmerkmale können auch in anderen Kombinationen erfindungswesentlich sein. Vorsorglich wird festgehalten, dass die vorstehende und die nachfolgende Beschreibung gleichermaßen im Hinblick auf ein Betriebsverfahren zu verstehen sind.
Figur 1 zeigt ein schematisiertes Blockschaltbild einer erfindungsgemäßen Versorgungsschaltung und
Figur 2 zeigt den Schaltungsaufbau einer Oszillatorschaltung aus Figur 1.

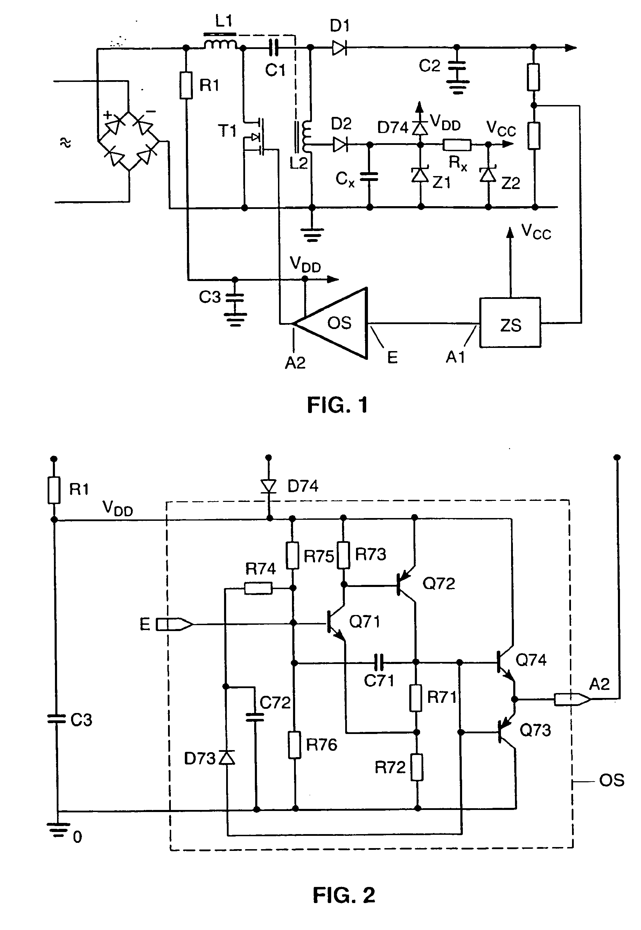

In Figur 1 ist eine erfindungsgemäße Versorgungsschaltung als Ausführungsbeispiel dargestellt. Links erkennt man, dass eine Versorgungswechselspannung, beispielsweise eine gewöhnliche Haushaltsnetzspannung, über eine Diodengleichrichterbrücke gleichgerichtet wird. Damit liegt in der Figur auf dem oben horizontal verlaufenden Leitungsast ein gleichgerichtetes positives Potential und unten ein gleichgerichtetes negatives Potential, das in der Regel auf Masse gelegt wird. Die gleichgerichtete Wechselspannung bildet den Eingang eines SEPIC-Wandlers, der die Spulen (Induktivitäten) L1 und L2, den Kondensator C1, die Gleichrichterdiode D1 und den Schalttransistor T1 aufweist und von der Zwangssteuerschaltung ZS geregelt wird. An den rechts eingezeichneten Ausgang des SEPIC-Wandlers, also parallel zu einem Speicherkondensator C2, ist eine Last geschaltet, die mit einer von dem Kondensator C2 zur Verfügung gestellten Gleichspannung versorgt wird. Bei der Last handelt es sich um einen üblichen Halbbrückenoszillator mit zwei Schalttransistoren zur Erzeugung einer hochfrequenten Wechselspannung, mit der eine Niederdruckgasentladungslampe betrieben werden kann. Da solche Schaltungen Stand der Technik und allgemein bekannt sind, ist die Last hier nicht dargestellt.

Der Kondensator C2 dient als Speicherkondensator und muss von dem SEPIC-Wandler aus der gleichgerichteten Wechselspannung auf eine möglichst konstante Gleichspannung aufgeladen werden. Dabei soll die Stromaufnahme aus dem Netz möglichst störungsfrei dem sinusförmigen Verlauf der Netzspannung nachgeführt werden.

Durch einen alternierenden Schaltbetrieb des Schalttransistors T1 wird die Spule L1 im Einschaltzustand aus der gleichgerichteten Netzspannung auf einen bestimmten Strom aufgeladen und im Ausschaltzustand des Schalttransistors T1 in den Kondensator C1 entladen. Gleichermaßen wird die Spule L2 in den Einschaltzeiten des Schalttransistors T1 aufgeladen und in den Ausschaltzeiten in den Speicherkondensator C2 entladen. (Die Polung der Diode D1 ist zu beachten.) Dabei ergibt sich ein sogenannter lückender Betrieb, wenn die Ausschaltzeiten des Schalttransistors T1 ausreichend lang sind, damit der Strom in der Gleichrichterdiode D1 auf Null sinkt. Dabei bleibt im Mittel der Kondensator C1 im wesentlichen auf dem Wert der momentanen gleichgerichteten Versorgungsspannung aufgeladen. Durch ein entsprechendes Tastverhältnis, also Verhältnis zwischen den Einschaltzeiten und Ausschaltzeiten, und unter Berücksichtigung der Last lässt sich damit im Wesentlichen eine beliebige Gleichspannung an dem Kondensator C2 einstellen.

Die Einschaltzeiten und Ausschaltzeiten des Schalttransistors T1 werden von der bereits erwähnten Zwangssteuerschaltung ZS vorgegeben. Bei der Zwangssteuerschaltung ZS handelt es sich um einen Teil eines auch zur Steuerung der Halbbrückenoszillatorschaltung verwendeten Mikrocontrollers in dem sämtliche für den Betrieb des elektronischen Vorschaltgeräts notwendigen Programme abgespeichert sind. Durch das eingezeichnete Abgreifen der Spannung an dem Kondensator C2 durch die Zwangssteuerschaltung ZS kann diese die Spannung an C2 konstant halten. Die Zwangssteuerschaltung ZS muss mit einer Betriebsspannung Vcc versorgt werden, die, wie Figur 1 zeigt, aus einem Abgriff an der Spule L2 mit Hilfe einer Gleichrichterdiode D2, zweier Zenerdioden Z₁ und Z₂, eines Kondensators Cx und eines Widerstandes Rx gebildet ist. An dem Abgriff wird außerdem eine zweite Versorgungsspannung V_{DD} gebildet, auf die später noch eingegangen wird. Daher sind zwei Zenerdioden zur Stabilisierung vorgesehen, wobei die beiden Versorgungsspannungsabgriffe durch den Widerstand voneinander getrennt sind. Die Versorgungsspannung V_{CC} wird erst erzeugt, wenn die durch den Schaltbetrieb des Transistors T1 bedingten Auflade- und Entladevorgänge der Spule L2 in Gang gekommen sind. Ohne Ansteuerung des Transistors T1 steht die Versorgungsspannung Vcc also nicht zur Verfügung.

Die in Figur 1 eingezeichnete Kopplung der beiden Spulen L1 und L2 hat für die Erfindung keine wesentliche Bedeutung und gehört zu den üblichen Massnahmen bei der Optimierung von SEPIC-Wandlern. Die Kopplung dient insbesondere zur Funkentstörung und wird hier in ihren Einzelheiten nicht erläutert.

Eine typische Größenordnung für die Versorgungsspannung Vcc des Mikrocontrollers liegt bei 3,3V oder 5V. Dementsprechend kann der in Figur 1 eingezeichnete Steuerausgang A1 der Zwangssteuerschaltung ZS, wie in Figur 1 angedeutet, nur Signalpegel zwischen 0 und der Versorgungsspannung Vcc erzeugen. Zur Ansteuerung des Schalttransistors T1 wird daher eine hier als Verstärker bzw. Treiber dienende Oszillatorschicht OS verwendet, an deren Eingang E der Steuerausgang A1 der Zwangssteuerschaltung gelegt ist. Die Oszillatorschaltung OS erzeugt an ihrem Ausgang A2 ein entsprechendes Ansteuersignal für den Steuereingang des Schalttransistors T1. Dieses Ansteuersignal kann Pegel zwischen 0 und der bereits erwähnten Versorgungsspannung V_{DD} annehmen, mit der die Oszillatorschaltung OS versorgt wird. Diese Versorgungsspannung V_{DD} kann ebenfalls an dem Abgriff der Spule L2 gewonnen werden, wie in Figur 1 eingezeichnet. Allerdings kann die Versorgungsspannung V_{DD} außerdem über einen Widerstand R1 an dem positiven Ast am Eingang des SEPIC-Wandlers und Ausgang der Gleichrichterbrücke abgegriffen werden, wobei ein gegen Masse geschalteter Kondensator C3 zur Energiespeicherung dient. Die Versorgungsspannung V_{DD} steht also bereits kurze Zeit (50 - 100 ms) nach dem Anlegen der Netzwechselspannung an die Gleichrichterbrücke zur Verfügung, ohne dass es auf den Schaltbetrieb des Transistors T1 ankommt.

Wesentlich ist hierbei, dass der Leistungsbedarf der Oszillatorschaltung OS wesentlich geringer als der der Zwangssteuerschaltung ZS bzw. des Mikrocontrollers ist. Daher kann der Widerstand R1 relativ groß sein, so daß im Dauerbetrieb nur geringe Leistungen über R1 entnommen werden. Die Leistungsversorgung über R1 und C3 genügt dabei also nur für die Oszillatorschaltung OS. Der Kondensator C3 hat durch die erwähnte anfängliche Aufladung über R1 soviel Energie gespeichert, dass die Oszillatorschaltung OS für eine ausreichend lange Zeit, beispielsweise etwa 10 ms, versorgt werden kann. Innerhalb dieser Zeit muss die eigentliche Versorgung aus der Spule L2 stabil sein, worauf noch näher eingegangen wird. Im weiteren Betrieb spielt die Aufladung des Kondensators C3 über R1 wegen der vergleichsweise geringen Ströme keine störende Rolle.

Ein typischer Wert für die Spannung V_{DD} liegt bei 10-15V, wobei es sich um das von dem Steuereingang des Schalttransistors T1 vorgegebene Spannungsniveau handelt. Damit dient die Oszillatorschaltung OS also zur Spannungsverstärkung der Signale des Ausgangs A1 der Zwangssteuerschaltung ZS. Daneben hat die Oszillatorschaltung OS aber auch Stromverstärkerfunktion, da die kapazitiven Umladevorgänge des Steuereingangs des Schalttransistors T1 ebenfalls "getrieben" werden müssen.

Wie Figur 2 im einzelnen verdeutlicht, ist die Oszillatorschaltung OS durch eine interne Rückkopplung so aufgebaut, dass sie bei einem hochohmigen Zustand des Eingangs E und Versorgung mit der Spannung V_{DD} zu oszillieren beginnt. Damit kann die Funktion des SEPIC-Wandlers durch eine oszillierende Ansteuerung des Schalttransistors T1 aufgenommen werden, so dass die Lade- und Entladevorgänge der Spulen L1 und L2 und des Kondensators C1 in Gang kommen. Ab einem gewissen Zeitpunkt steigt die an der Spule L2 abgegriffene und in der in Figur 1 skizzierten Weise gleichgerichtete und stabilisierte Versorgungsspannung Vcc auf ein ausreichendes Niveau für die Zwangssteuerschaltung ZS bzw. den Mikrocontroller, so dass dessen

Anlaufroutinen beginnen. Sobald die Zwangssteuerschaltung ZS an ihrem Ausgang A1 ein Steuersignal erzeugt, wird der Eingang E niederohmig mit den jeweiligen Bezugspotentialen 0 und Vcc verbunden. Hierdurch übernimmt die Zwangssteuerschaltung ZS eine Zwangssteuerung der Oszillatorschaltung OS, die im folgenden als Verstärker bzw. Treiber arbeitet und ein verstärktes Steuersignal für den Schalttransistor T1 erzeugt.

Die mit der Versorgungsspannung Vcc verbundenen Ströme sind insbesondere beim Start des Mikrocontrollers relativ groß, üblicherweise wesentlich mehr als 500µA. Wenn die Zwangssteuerschaltung ZS bzw. der Mikrocontroller über eine der Schaltung mit dem Widerstand R1 und dem Kondensator C3 vergleichbare Schaltung versorgt würde, müsste der entsprechende Widerstand so klein gewählt werden, dass seine Verlustleistung im Dauerbetrieb sehr nachteilig wäre. Im übrigen kann das in diesem Ausführungsbeispiel dargestellte elektronische Vorschaltgerät für einen weiten Bereich von Eingangswechselspannungen (Eingang der Gleichrichterbrücke) ausgelegt werden, wobei immer die geeigneten Versorgungsspannungen Vcc für den Mikrocontroller erzeugt werden.

Solange die Versorgungsspannung V_{DD} der Verstärkerschaltung noch nicht erreicht ist, weil der Kondensator C3 noch nicht aufgeladen ist, bleibt die Oszillatorschaltung OS inaktiv und nimmt nur einen geringen Strom auf.

Figur 2 zeigt die Oszillatorschaltung OS innerhalb des gestrichelt gezeichneten Rahmens. Die Versorgung V_{DD} über den Widerstand R1 ist links oben eingezeichnet. Der mittig aus dem gestrichelten Rahmen nach oben herausgeführte Anschluss ist die Ankopplung für die Versorgung mit V_{DD} aus dem Abgriff an der Spule L2, wie in Figur 1 angedeutet. Hier ist eine Entkoppeldiode D74 vorgesehen. Rechts erkennt man den Ausgang A2, der in Figur 1 links eingezeichnet ist, und links den Eingang E, der in Figur 1 rechts eingezeichnet ist. Die Transistoren Q71 und Q72 bilden zusammen mit den Widerständen R71, R72, R73, R75 und R76 und dem Kondensator C71 in Folge der Rückkopplung durch C71 einen analogen, selbsterregt schwingenden Oszillator, dessen Frequenz sich im wesentlichen durch die Widerstands- und Kapazitätswerte von C71 und R76 ergibt. Die selbsterregte Schwingung ist jedoch nur solange möglich, wie an dem Eingang E eine hohe Impedanz liegt. Wenn E niederohmig mit einem Bezugspotential verbunden ist, so wird damit der Steuereingang (Basis) des Kondensators Q71 und infolgedessen auch der Steuereingang des Kondensators Q72 zwangsgesteuert.

Die von dem Kollektor des Kondensators Q72 über die Diode D73 zu der Basis des Kondensators Q71 zurückgeführte Leitung dient dazu, nach dem Oszillatorstart und einem durch die Leistungsaufnahme der Oszillatorschaltung OS bedingten Abfall der Spannung an dem Kondensator C3 für die Basis des Transistors Q71 einen Hilfsstrom zur Verfügung zu stellen. Damit ist gewissermaßen eine hystereseartige Abhängigkeit von der Versorgungsspannung an dem Kondensator C3 gegeben.

Die Transistoren Q73 und Q74 dienen zur Stromverstärkung und treiben direkt den Ausgang A2.

Die Schwellspannung für den Anlauf der Oszillatorschaltung kann mit dem Teilverhältnis R75 zu R76 gewählt werden, die untere Abschaltschwelle bei fallender Versorgungsleistung mit R74. Die Frequenz lässt sich mit C71 und R75/R76, die Pulsweite mit R71/R72 wählen, wobei diese beiden Widerstände auch die Gleichspannungsverstärkung bestimmen.

## Patentansprüche

1. Versorgungsschaltung mit
einem Schalttransistor (T1)
einer Zwangssteuerschaltung (ZS) zum Ansteuern eines Steuereingangs des Schalttransistors (T1),
und einer mit dem Steuereingang verbundenen Oszillatorschaltung (OS), die dazu ausgelegt ist, bei einem Betriebsbeginn der Versorgungsschaltung zunächst eine von der Zwangssteuerschaltung (ZS) unabhängige Oszillation auszuführen und dabei den Steuereingang des Schalttransistors (T1) anzusteuern,
wobei die Versorgungsschaltung dazu ausgelegt ist, dass die Zwangssteuerschaltung (ZS) infolge der Ansteuerung des Steuereingangs durch die Oszillatorschaltung (OS) durch eine von der Versorgungsschaltung aufgebaute Versorgungsleistung versorgt wird und daraufhin die Ansteuerung des Steuereingangs des Schalttransistors (T1) übernimmt,
**dadurch gekennzeichnet, dass** die Oszillatorschaltung (OS) eine Verstärkerschaltung mit einer Rückkopplung (C71) ist, die einen mit einem Ausgang (A1) der Zwangssteuerschaltung (ZS) verbundenen Eingang (E) und einen mit dem Steuereingang des Schalttransistors (T1) verbundenen Ausgang (A2) aufweist und bei der Ansteuerung des Steuereingangs des Schalttransistors (T1) durch die Zwangssteuerschaltung (ZS) als Verstärker für den Ausgang (A1) der Zwangssteuerschaltung (ZS) dient.

2. Versorgungsschaltung nach Anspruch 1, die eine Leistungsfaktorkorrekturschaltung (L1, L2, C1, D1, T1) zur oberwellenbegrenzten Entnahme einer Gleichspannungsleistung aus einem Wechselstromnetz ist.

3. Versorgungsschaltung nach Anspruch 2, die ein SEPIC-Wandler (L1, L2, C1, D1, T1) ist.

4. Versorgungsschaltung nach einem der vorstehenden Ansprüche, bei der die Zwangssteuerschaltung (ZS) ein Mikrocontroller ist.

5. Versorgungsschaltung nach einem der vorstehenden Ansprüche, bei der die Betriebsfunktion der Oszillatorschaltung (OS) als Oszillatorschaltung einerseits und als Verstärkerschaltung andererseits abhängig von dem Schaltungszustand des Eingangs (E) der Oszillatorschaltung durchgeführt wird.

6. Versorgungsschaltung nach Anspruch 5, bei der die Oszillatorschaltung einen mit dem Ausgang der Zwangssteuerschaltung verbundenen Digitaleingang aufweist und bei einem Eingangspegel von logisch 0 oder logisch 1 als Treiberschaltung arbeitet und bei einem Eingangspegel in einem unbestimmten Zwischenbereich als Oszillatorschaltung arbeitet.

7. Versorgungsschaltung nach Anspruch 5, bei der die Oszillatorschaltung (OS) bei einer niedrigen Impedanz des Eingangs (E) zu einem Bezugspotential als Verstärkerschaltung arbeitet und bei einer hohen Impedanz des Eingangs (E) zu dem Bezugspotential als Oszillatorschaltung arbeitet.

8. Elektronisches Vorschaltgerät einer Lampe mit einer Versorgungsschaltung nach einem der vorstehenden Ansprüche.

9. Elektronisches Vorschaltgerät nach Anspruch 8, das zur Versorgung einer Entladungslampe ausgelegt ist.

## Claims

1. Supply circuit having a switching transistor (T1),
a forcing circuit (ZS) for driving a control input of the switching transistor (T1),
and an oscillator circuit (OS) which is connected to the control input and is configured in such a way that a startup operation of the supply circuit firstly carries out an oscillation which is independent of the forcing circuit (ZS) and in doing so actuates the control input of the switching transistor (T1),
the supply circuit being configured in such a way that the forcing circuit (ZS) is supplied, as a result of the driving of the control input by the oscillator circuit (OS), by a supply current produced by the supply circuit, and subsequently performs the driving of the control input of the switching transistor (T1), **characterized in that** the oscillator circuit (OS) is an amplifier circuit with a feedback (C71) which has an input (E) which is connected to an output (A1) of the forcing circuit (ZS), and an output (E2) which is connected to the control input of the switching transistor (T1), and serves as an amplifier for the output (A1) of the forcing circuit (ZS) when the control input of the switching transistor (T1) is driven by the forcing circuit (ZS).

2. Supply circuit according to Claim 1, which is a power factor correction circuit (L1, L2, C1, D1, T1) for the harmonic-limited extraction of a D.C. voltage from an A.C. power system.

3. Supply circuit according to Claim 2, which is a SEPIC converter (L1, L2, C1, D1, T1).

4. Supply circuit according to one of the preceding claims, in which the forcing circuit (ZS) is a microcontroller.

5. Supply circuit according to one of the preceding claims, in which the operating function of the oscillator circuit (OS) is carried out as an oscillator circuit on the one hand, and as an amplifier circuit on the other, as a function of the circuit state of the input (E) of the oscillator circuit.

6. Supply circuit according to Claim 5, in which the oscillator circuit has a digital input which is connected to the output of the forcing circuit, and operates as a driver circuit when there is an input level of logic 0 or logic 1, and operates as an oscillator circuit when there is an input level in a nonspecific intermediate region.

7. Supply circuit according to Claim 5, in which the oscillator circuit (OS) operates as an amplifier circuit when there is a low impedance of the input (E) with respect to a reference potential, and as an oscillator circuit when there is a high impedance of the input (E) with respect to the reference potential.

8. Electronic ballast of a lamp having a supply circuit according to one of the preceding claims.

9. Electronic ballast according to Claim 8, which is designed to supply a discharge lamp.

## Revendications

1. Circuit d'alimentation comportant
un transistor de commutation (T1),
un circuit de commande forcée (ZS) pour la commande d'une entrée de commande du transistor de commutation (T1),
et un circuit oscillateur (OS) qui est relié à l'entrée de commande et qui est conçu pour, au début du fonctionnement du circuit d'alimentation, exécuter d'abord une oscillation indépendante du circuit de commande forcée (ZS) et commander ce faisant l'entrée de commande du transistor de commutation (T1),
le circuit d'alimentation étant conçu de telle sorte que le circuit de commande forcé (ZS) est alimenté, suite à la commande de l'entrée de commande par le circuit oscillateur (OS), par une puissance d'alimentation élaborée par le circuit d'alimentation et prend ensuite en charge la commande de l'entrée de commande du transistor de commutation (T1),
**caractérisé par le fait que** le circuit oscillateur (OS) est un circuit amplificateur avec une rétroaction (C71) qui comporte une entrée (E) reliée à une sortie (A1) du circuit de commande forcée (ZS) et une sortie (A2) reliée à l'entrée de commande du transistor de commutation (T1) et qui, lors de la commande de l'entrée de commande du transistor de commutation (T1) par le circuit de commande forcée (ZS), sert d'amplificateur pour la sortie (A1) du circuit de commande forcée (ZS).

2. Circuit d'alimentation selon la revendication 1, qui est un circuit correcteur de facteur de puissance (L1, L2, C1, D1, T1) pour prélever d'un réseau à courant alternatif, en limitant les harmoniques, une puissance de tension continue.

3. Circuit d'alimentation selon la revendication 2, qui est un convertisseur SEPIC (L1, L2, C1, D1, T1).

4. Circuit d'alimentation selon l'une des revendications précédentes, dans lequel le circuit de commande forcée (ZS) est un microcontrôleur.

5. Circuit d'alimentation selon l'une des revendications précédentes, dans lequel le circuit oscillateur (OS) fonctionne d'une part comme circuit oscillateur et d'autre part comme circuit amplificateur en fonction de l'état de commutation de l'entrée (E) du circuit oscillateur.

6. Circuit d'alimentation selon la revendication 5, dans lequel le circuit oscillateur comporte une entrée numérique reliée à la sortie du circuit de commande forcée et fonctionne comme circuit d'attaque en présence d'un niveau d'entrée égal au 0 logique ou au 1 logique et comme circuit oscillateur en présence d'un niveau d'entrée situé dans un domaine intermédiaire indéterminé.

7. Circuit d'alimentation selon la revendication 5, dans lequel le circuit oscillateur (OS) fonctionne comme circuit amplificateur en présence d'une petite impédance de l'entrée (E) vers un potentiel de référence et comme circuit oscillateur en présence d'une grande impédance de l'entrée (E) vers le potentiel de référence.

8. Ballast électronique d'une lampe avec un circuit d'alimentation selon l'une des revendications précédentes.

9. Ballast électronique selon la revendication 8, qui est conçu pour l'alimentation d'une lampe à décharge.
